# EUROPEAN PATENT APPLICATION

(11) **EP 3 683 954 A1**
(43) Date of publication of application: **22.07.2020**
(21) Application number: 18855250.9
(22) Date of filing: 14.09.2018
(51) Int. Cl.: H02P 6/16, G01D 5/245

(54) **MOTOR DRIVE SYSTEM AND MOTOR CONTROL METHOD**

(30) Priority: 15.09.2017 JP 2017177716
(71) Applicant: NTN Corporation, Osaka-shi, Osaka 550-0003 (JP)
(72) Inventor: INOKUCHI, Kazuyuki, Iwata-shi, Shizuoka 438-8510 (JP); MATSUTO, Takushi, Iwata-shi, Shizuoka 438-8510 (JP)
(74) Representative: Bockhorni & Brüntjen Partnerschaft Patentanwälte mbB
(86) International application number: PCT/JP2018/034169
(87) International publication number: WO 2019/054475

(57) **Abstract**

A motor drive system (10) includes a motor (50), a 2-axis magnetic sensor (80), an alternating-type magnetic sensor (70), a magnetic pole rotation angle detector (60), and a motor controller (20). The alternating-type magnetic sensor (70) and the 2-axis magnetic sensor (80) are disposed on a substrate having an invariable positional relation with a stator. The alternating-type magnetic sensor (70) includes a Hall sensor (71 to 73). The number of Hall sensors (71 to 73) is equal to or greater than the number of a plurality of phases of a coil of the motor (50). The magnetic pole rotation angle detector (60) detects a magnetic pole rotation angle of a rotor upon reception of an output from the 2-axis magnetic sensor (80) and an output from the alternating-type magnetic sensor (70). The motor controller (20) controls a current of the coil using the magnetic pole rotation angle of the rotor detected by the magnetic pole rotation angle detector (60). Thus, the torque fluctuations at the extremely low rotation speed and in the rotation stopped state of a brushless motor can be reduced while suppressing cost increase.

## Description

### TECHNICAL FIELD

The present invention relates to a motor drive system including a multi-phase brushless motor and a method of controlling the multi-phase brushless motor.

### BACKGROUND ART

A drive controlling method for a brushless motor includes: a square wave driving method of changing a current-conducting pattern at each electrical angle of 60 degrees of the rotation of a rotor; and a sine wave driving method of driving at a sine wave that is synchronized with rotation. Square wave driving is greater in driving efficiency and less in torque fluctuations than square wave driving. Thus, square wave driving causes less vibration and less noise. In order to perform the above-described drive controlling, a magnetic pole detection sensor is used for generating a drive voltage in synchronization with the rotation of a rotor.

For detecting a magnetic pole in a brushless motor, a plurality of alternating-type magnetic sensors (N-S switch type) such as an inexpensive Hall IC are generally used. In order to perform sine wave driving using these sensors, a magnetic pole position needs to be estimated by interpolation based on the elapsed time from the timing of detection by each of the sensors.

In Japanese Patent Laying-Open No. 2003-009579 (PTL 1), the magnetic pole position is estimated by interpolation calculation when the rotation speed is equal to or greater than a prescribed speed. When the rotation speed is less than the prescribed speed and extremely low, interpolation calculation is not performed, but a fixed angular value at the detection position is used. Furthermore, in Japanese Patent Laying-Open No. 2007-110781 (PTL 2), torque reduction is prevented by the current value correction increasing the current value at the extremely low rotation speed or in the rotation stopped state.

### CITATION LIST

### PATENT LITERATURE

PTL 1: Japanese Patent Laying-Open No. 2003-009579
PTL 2: Japanese Patent Laying-Open No. 2007-110781

### SUMMARY OF INVENTION

### TECHNICAL PROBLEM

In the method of using a plurality of alternating-type magnetic sensors and in the sensorless driving method, interpolation can be performed in the usage in which a motor continuously rotates. In the usage as an actuator performing position control, torque control and the like using motive power from a motor, however, the motor may irregularly or intermittently rotate, so that interpolation may be unable to be performed. In such a case, square wave driving is used, which may cause a problem that torque fluctuations become larger.

For example, according to the method disclosed in Japanese Patent Laying-Open No. 2003-009579 (PTL 1), interpolation calculation is not performed at the extremely low rotation speed, but the fixed angular value at the detection position is discretely used. Thus, torque fluctuations at the extremely low rotation speed cannot be suppressed.

Furthermore, according to the method disclosed in Japanese Patent Laying-Open No. 2007-110781 (PTL 2), the current value is corrected while increasing the current value at the extremely low rotation speed or in the rotation stopped state, which still poses a problem that torque increases conversely depending on the rotation position. Thus, the linearity of the current-torque characteristics cannot be ensured.

When torque fluctuations and poor linearity are not allowable, it is a common practice to use a resolver that is capable of highly accurately detecting the rotation position with high response speed from the stalled state. However, since the resolver has a complicated structure and also requires a dedicated drive circuit, the system including a motor is inevitably increased in size and cost.

The present invention has been made to solve the above-described problems. An object of the present invention is to provide a motor drive system and a method of controlling a motor, by which the torque fluctuations at the extremely low rotation speed and in the rotation stopped state can be reduced while using a relatively inexpensive and small-sized sensor.

### SOLUTION TO PROBLEM

In summary, the present invention is a motor drive system that includes: a stator around which a coil of a plurality of phases is wound; a rotor that rotates about a rotation axis with respect to the stator; a pulser ring that is fixed to the rotor and provided with magnets disposed such that an N pole and an S pole alternate circumferentially; a 2-axis magnetic sensor that is disposed on a member having an invariable positional relation with the stator; an alternating-type magnetic sensor that is disposed on the member, the number of alternating-type magnetic sensors being equal to or greater than the number of the phases of the coil; a magnetic pole rotation angle detector that detects a magnetic pole rotation angle of the rotor upon reception of an output from the 2-axis magnetic sensor and an output from the alternating-type magnetic sensor; and a motor controller that controls a current of the coil using the magnetic pole rotation angle of the rotor detected by the magnetic pole rotation angle detector.

Preferably, the magnetic pole rotation angle detector calculates the magnetic pole rotation angle of the rotor using the output from the 2-axis magnetic sensor when a rotation speed of the rotor is lower than a threshold value, and calculates the magnetic pole rotation angle of the rotor using the output from the alternating-type magnetic sensor when the rotation speed of the rotor is higher than the threshold value.

Preferably, when one of the 2-axis magnetic sensor and the alternating-type magnetic sensor abnormally operates while the other of the 2-axis magnetic sensor and the alternating-type magnetic sensor normally operates, the magnetic pole rotation angle detector calculates the magnetic pole rotation angle of the rotor using the output from a normally operating one of the 2-axis magnetic sensor and the alternating-type magnetic sensor.

The present invention is a method of controlling a motor in another aspect. The motor includes: a stator around which a coil of a plurality of phases is wound; a rotor that rotates about a rotation axis with respect to the stator; a pulser ring that is fixed to the rotor and provided with magnets disposed such that an N pole and an S pole alternate circumferentially; a 2-axis magnetic sensor that is disposed on a member having an invariable positional relation with the stator; and an alternating-type magnetic sensor that is disposed on the member, the number of alternating-type magnetic sensors being equal to or greater than the number of the phases of the coil. The method includes: calculating a magnetic pole rotation angle of the rotor using an output from the 2-axis magnetic sensor when a rotation speed of the rotor is lower than a threshold value, and calculating the magnetic pole rotation angle of the rotor using an output from the alternating-type magnetic sensor when the rotation speed of the rotor is higher than the threshold value; and controlling a current of the coil using the calculated magnetic pole rotation angle of the rotor.

### ADVANTAGEOUS EFFECTS OF INVENTION

According to the present invention, in a multi-phase brushless motor, the torque fluctuations at the extremely low rotation speed and in the rotation stopped state can be reduced while suppressing cost increase.

### BRIEF DESCRIPTION OF DRAWINGS

Fig. 1 is a block diagram showing the schematic configuration of a multi-phase brushless motor according to the first embodiment.
Fig. 2 is a projection view showing main components of a motor 50.
Fig. 3 is a developed view of the main components of motor 50.
Fig. 4 is a diagram showing the shape of a substrate 54.
Fig. 5 is a diagram for illustrating vectors detected by a 2-axis magnetic sensor.
Fig. 6 is a diagram showing the first example of waveforms output from the 2-axis magnetic sensor.
Fig. 7 is a diagram showing the second example of waveforms output from the 2-axis magnetic sensor.
Fig. 8 is a diagram showing a part of a pulser ring 53 in an enlarged manner.
Fig. 9 is a schematic diagram showing the manner in which the relative position of 2-axis magnetic sensor 80 changes along pulser ring 53.
Fig. 10 is a diagram showing an example of the relation between a magnetic pole rotation angle and the detected angle by 2-axis magnetic sensor 80.
Fig. 11 is a diagram showing the torque fluctuation characteristics in accordance with the motor rotation position in the stalled state in comparison between sine wave driving and square wave driving.
Fig. 12 is a diagram showing the result of comparison of N-T characteristics between the case of a 2-axis magnetic sensor and the case of an alternating-type magnetic sensor, each of which is used for detecting a magnetic pole in the same motor.
Fig. 13 is a flowchart for illustrating a switching process of a magnetic pole rotation angle detector 60 in the first embodiment.
Fig. 14 is a flowchart for illustrating a switching process of a magnetic pole rotation angle detector 60 in the second embodiment.
Fig. 15 is a diagram showing an application example of a motor drive system.

### DESCRIPTION OF EMBODIMENTS

The embodiments of the present invention will be hereinafter described with reference to the accompanying drawings, in which the same or corresponding components will be denoted by the same reference characters, and description thereof will not be repeated.

### [First Embodiment]

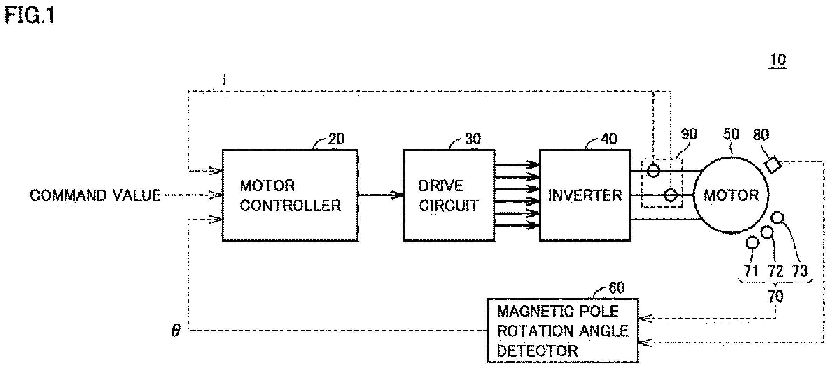

Fig. 1 is a block diagram showing the schematic configuration of a multi-phase brushless motor according to the first embodiment. Referring to Fig. 1, a motor drive system 10 includes a motor controller 20, a drive circuit 30, an inverter 40, a three-phase brushless direct-current (DC) motor (hereinafter referred to as a "motor") 50, a magnetic pole rotation angle detector 60, an alternating-type magnetic sensor 70, a 2-axis magnetic sensor 80, and a current sensor 90.

Motor controller 20 controls drive circuit 30 based on: the current value of each phase coil of motor 50 detected by current sensor 90; the magnetic pole rotation angle of the rotor of motor 50 detected by magnetic pole rotation angle detector 60; and the given command value. Motor controller 20 generates a current command value from the command value given based on the rotation speed, the torque, the position of a driven member operating in cooperation with the rotor of the motor, and the like. Then, motor controller 20 performs a PWM process to generate a driving signal for drive circuit 30.

Based on the PWM signal received from motor controller 20, drive circuit 30 generates a control pulse for turning on and off each of six power switching elements in inverter 40, and transmits each control pulse to inverter 40. When six power switching elements in inverter 40 are turned on or off, a drive current flows through U-phase, V-phase and W-phase current-conducting paths into a stator coil, thereby driving motor 50 to be rotated.

Alternating-type magnetic sensor 70 includes Hall sensors 71 to 73. The output from each of Hall sensors 71 to 73 is converted into a binary value by the N pole and the S pole of the magnetic pole. Then, 2-axis magnetic sensor 80 detects the direction of the magnetic field inside motor 50, as described below. Magnetic pole rotation angle detector 60 receives the output from alternating-type magnetic sensor 70 and the output from 2-axis magnetic sensor 80.

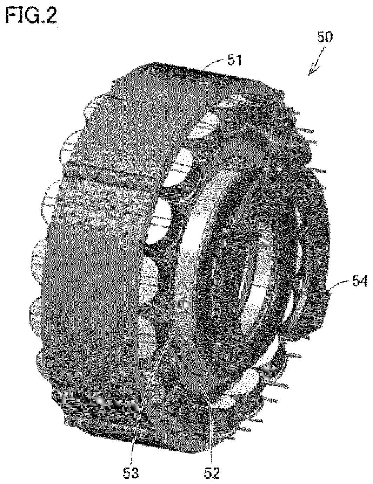

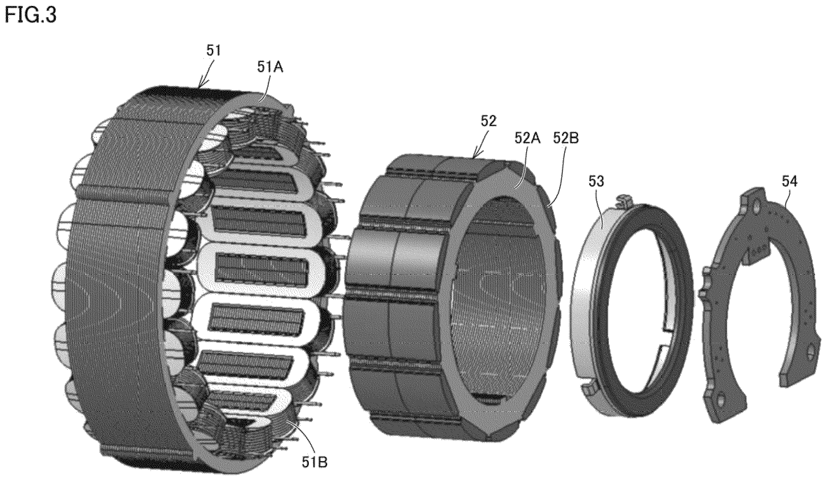

Fig. 2 is a projection view showing main components of motor 50. Fig. 3 is a developed view of the main components of motor 50. Referring to Figs. 2 and 3, motor 50 includes: a stator 51; a rotor 52 that rotates about the rotation axis with respect to stator 51; a pulser ring 53 that is fixed to rotor 52 and provided with magnets disposed such that an N pole and an S pole alternate circumferentially; and a member having an invariable positional relation with stator 51 (for example, a substrate 54 fixed to a motor case (not shown) to which stator 51 is fixed).

Stator 51 includes: a stator core 51A formed of a magnetic material such as an electromagnetic steel plate; and a stator coil 51B wound around stator core 51A and having a U-phase, a V-phase and a W-phase as star-connected three signal phases. Rotor 52 includes a rotor core 52A and permanent magnets 52B that are disposed on the outer circumference of rotor core 52A.

Pulser ring 53 is provided with magnets including N poles and S poles that are equal in number to the N poles and the S poles of permanent magnets 52B of the rotor. Also, pulser ring 53 is disposed at a fixed distance from substrate 54.

Figs. 2 and 3 each shows a motor having hollow rotor 52, but rotor 52 does not have to be hollow and may be fixed to the rotation shaft as an output shaft of the motor.

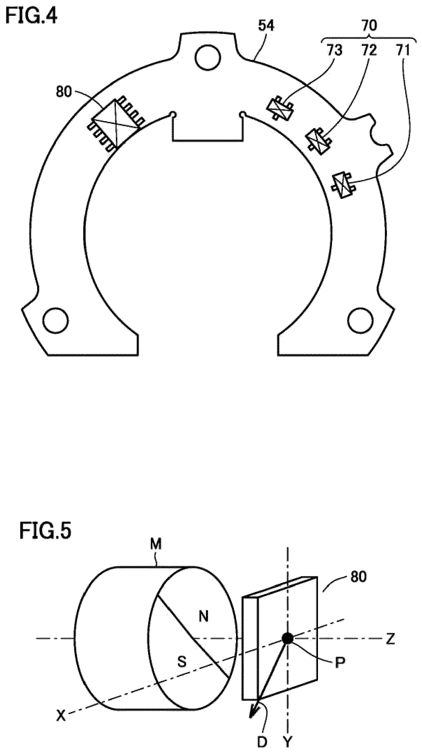

Fig. 4 is a diagram showing the shape of substrate 54. As shown in Fig. 4, alternating-type magnetic sensor 70 and 2-axis magnetic sensor 80 in Fig. 1 are disposed on substrate 54.

By Hall sensors 71 to 73, alternating-type magnetic sensor 70 detects the position of the magnet on pulser ring 53 that rotates in accordance with rotation of rotor 52, and outputs position detection signals PU, PV, and PW as magnetic pole position information at each prescribed angle (for example, 60°).

Based on the combination of the signal levels of position detection signals PU, PV, and PW received from Hall sensors 71 to 73, magnetic pole rotation angle detector 60 generates six detection pulses, and, based on each of the detection pulses, detects a magnetic pole position. The output from each of Hall sensors 71 to 73 is switched between a high level and a low level in response to the alternation detection, that is, switching of the polarity of the magnetic pole. Hall sensors 71 to 73 each keep memory of the polarity of the last closest magnetic pole also after the magnets are separated from Hall sensors 71 to 73. Such Hall sensors have conventionally been used for coil switching in a brushless motor.

On the other hand, 2-axis magnetic sensor 80 detects the magnetic field at a point in a space as a point to be detected. In such a magnetic sensor, the number of dimensions of the space for detection is set in accordance with the number of detection axes that are orthogonal to one another. Thus, a 2-axis magnetic sensor can detect a magnetic field as vectors in the two-dimensional plane while a 3-axis magnetic sensor can detect a magnetic field as vectors in the three-dimensional space. In the present embodiment, 2-axis magnetic sensor 80 is used as shown in Fig. 1 in order to detect a rotating magnetic field.

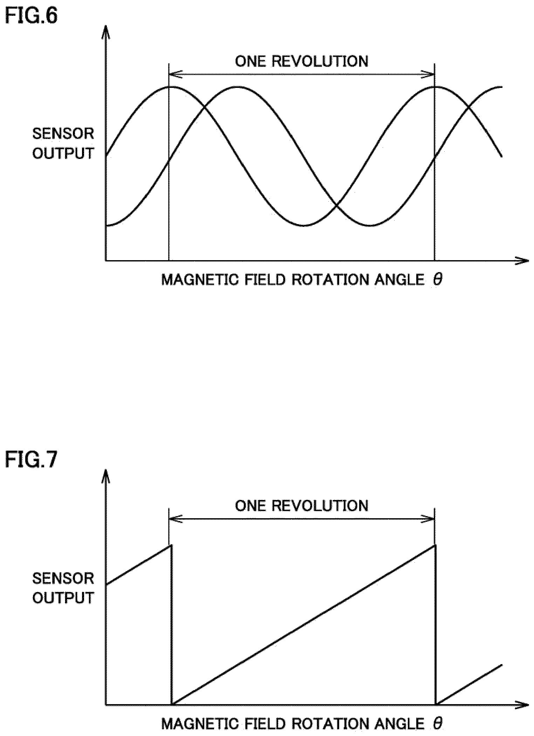

Fig. 5 is a diagram for illustrating vectors detected by the 2-axis magnetic sensor. Fig. 6 is a diagram showing the first example of waveforms output from the 2-axis magnetic sensor. Fig. 7 is a diagram showing the second example of waveforms output from the 2-axis magnetic sensor. When a magnet M is disposed in the vicinity of 2-axis magnetic sensor 80 as shown in Fig. 5, 2-axis magnetic sensor 80 outputs the direction and the magnitude of the magnetic field at a detection target point (a point to be detected) P. Then, 2-axis magnetic sensor 80 outputs the information that shows a vector D in an X-Y plane. When magnet M rotates about a Z-axis as a rotation axis, vector D also rotates in line with the direction of the magnetic field.

The 2-axis magnetic sensor is provided as an IC on which a plurality of Hall elements and a signal processing circuit are integrated, for example. The 2-axis magnetic sensor includes; a type (type A) that outputs magnetic field strength of each of the X-axis and the Y-axis as shown in Fig. 6; and a type (type B) that outputs an angle θ of the magnetic field vector by internal computation as shown in Fig. 7. With respect to the magnetic field that rotates at a certain angular velocity, the sensor of type A outputs a sine wave (a sin wave) and a cosine wave (a cos wave) while the sensor of type B outputs a saw-tooth wave. When the magnetic field strength of each of the X-axis and the Y-axis is output (type A), the vector of the magnetic field detected in the subsequent stage of the sensor needs to be calculated by computation. When the angle of the magnetic field vector is output (type B), computation is performed in a signal processing circuit inside the sensor. In this case, the scalar quantity of the output shows an angle itself, which eliminates the need to perform computation in the subsequent stage of the sensor. Furthermore, a sensor capable of correcting linearity is also commercially available, but this type of sensor causes a detection delay resulting from computation.

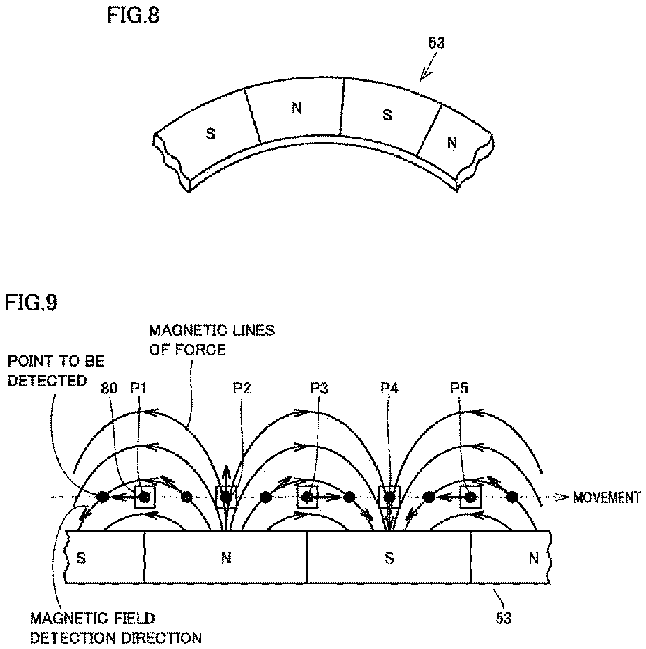

The following is an explanation about the theory by which the magnetic pole position is detected by pulser ring 53 using 2-axis magnetic sensor 80. Fig. 8 is a diagram showing a part of pulser ring 53 in an enlarged manner. Fig. 9 is a schematic diagram showing the manner in which the relative position of 2-axis magnetic sensor 80 changes along pulser ring 53.

When the magnets are arranged such that N poles and S poles alternate in the circumferential direction as shown in Figs. 8 and 9, rotation of rotor 52 causes 2-axis magnetic sensor 80 to move relatively along the direction in which the magnets are arranged. Assume that the direction of the magnetic field is shown by magnetic lines of force. The directions of the magnetic lines of force at detection points P1 to P5 of 2-axis magnetic sensor 80 each rotate by one revolution when the sensor moves past a pair of the N pole and the S pole as a result of the relative movement between the sensor and the magnet. The magnetic pole of pulser ring 53 is disposed in a circumferential shape in synchronization with the magnetic pole of the rotor similarly to the case of a commonly used alternating-type magnetic sensor (N-S switch). Then, when the direction of the magnetic field is detected similarly to the previous example, this cycle coincides with the cycle of the electrical angle of the motor. In other words, when rotor 52 rotates by the amount corresponding to a pair of poles, the electrical angle rotates by one revolution. In synchronization with this rotation, the detected angle by 2-axis magnetic sensor 80 also rotates by one revolution. Thus, 2-axis magnetic sensor 80 can detect the electrical angle.

Again referring to Figs. 3 and 4, the configuration of a three-phase brushless motor according to the present embodiment will be described. Pulser ring 53 as a portion to be detected in the case of magnetic pole detection rotates together with rotor 52. As detectors, three-phase alternating-type magnetic sensor 70 (three Hall sensors 71 to 73) and one 2-axis magnetic sensor 80 are fixed to substrate 54 so as to face pulser ring 53. Together with stator 51, substrate 54 is fixed to a motor case (not shown). When the detector and the portion to be detected are disposed in the thrust direction in this way, the 2-axis magnetic sensor detects, from the magnetic field generated by pulser ring 53, the component (indicated by an arrow in Fig. 9) on the plane that is orthogonal to the surface of pulser ring 53 and that is in parallel with the circumferential tangent.

The direction of the magnetic field detected by 2-axis magnetic sensor 80 is denoted by the rotation angle of 360°, and, upon rotation of rotor 52 by one revolution, rotates by the number of revolutions corresponding to the number of pole pairs. In the example in Fig. 3, the number of pole pairs is six. Thus, when rotor 52 rotates by one revolution, the detected angle by 2-axis magnetic sensor 80 rotates by six revolutions. Furthermore, when the mechanical angle of the rotor rotates by one revolution, the electrical angle rotates by the number of revolutions corresponding to the number of pole pairs. Then, by accurately detecting this electrical angle, motor control with less torque fluctuations can be achieved. When the magnets of pulser ring 53 are arranged so as to correspond to the arrangement of the magnets of rotor 52, the detected direction of the magnetic field uniquely corresponds to the rotation of the electrical angle. By converting the detected direction of the magnetic field into an electrical angle, the electrical angle can be accurately calculated.

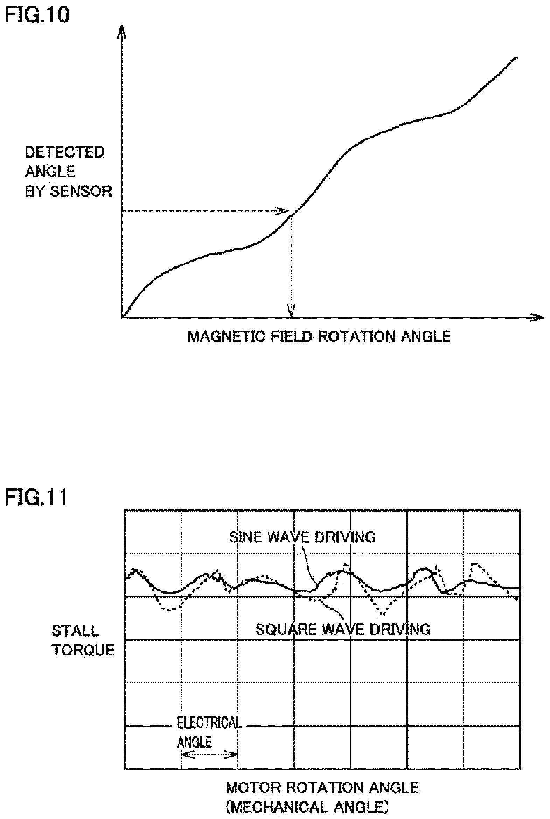

In the positional relation between pulser ring 53 and 2-axis magnetic sensor 80 shown in Figs. 3, 4, and 9, the cycle of the magnetic pole rotation angle coincides with the cycle of the detected angle by 2-axis magnetic sensor 80, but the magnetic pole rotation angle and the detected angle by 2-axis magnetic sensor 80 do not establish a straight line relation. Fig. 10 is a diagram showing an example of the relation between the magnetic pole rotation angle and the detected angle by 2-axis magnetic sensor 80. Transitions of the respective angles do not coincide with one another as shown in Fig. 10, which requires conversion to be performed for obtaining an electrical angle from the detected angle. This conversion may be performed using the linearity correcting function of 2-axis magnetic sensor 80 or may be performed through computation in the subsequent stage of 2-axis magnetic sensor 80.

By using 2-axis magnetic sensor 80, the electrical angle can be obtained also in the stalled state and at the extremely low rotation speed. Thus, sine wave driving can be performed also in the stalled state and at the extremely low rotation speed. Fig. 11 is a diagram showing the torque fluctuation characteristics in accordance with the motor rotation position in the stalled state in comparison between sine wave driving and square wave driving. As shown in Fig. 11, stall torque fluctuations are suppressed more in sine wave driving than in square wave driving. Accordingly, by sine wave driving, torque fluctuations are reduced in the stalled state and at the extremely low rotation speed.

Furthermore, since 2-axis magnetic sensor 80 only has to be mounted in existing substrate 54, the layout of the output axis is not limited as in the case where a resolver and the like are additionally provided. According to the motor drive system of the present embodiment, sine wave driving can be applied also in the stalled state by using inexpensive 2-axis magnetic sensor 80. Thus, torque fluctuations can be further improved as compared with the case where an alternating-type magnetic sensor is used.

However, 2-axis magnetic sensor 80 causes a delay in detection when a computation process is performed in a sensor, or requires longer time for computation when a computation process is performed in the subsequent stage, which may deteriorate the motor performance during high speed rotation.

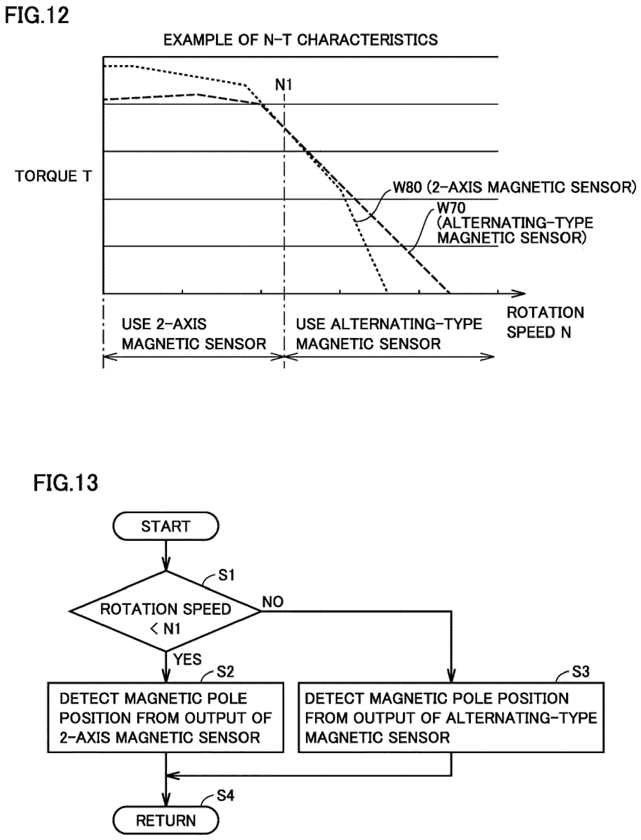

Fig. 12 is a diagram showing the result of comparison of N-T characteristics between the case of a 2-axis magnetic sensor and the case of an alternating-type magnetic sensor, each of which is used for detecting a magnetic pole in the same motor. As shown in Fig. 12, the N-T characteristics showing the relation between the rotation speed and the torque are more excellent when 2-axis magnetic sensor 80 is used in the low speed rotation region from the stalled state to a rotation speed N1 (W80), and more excellent when alternating-type magnetic sensor 70 is used in the high speed rotation region exceeding rotation speed N1 (W70).

Thus, it is preferable to switch to a conventionally used detection method by three-phase alternating-type magnetic sensor 70 upon exceeding a certain number of rotations. By using two types of magnetic sensors, deterioration of the motor performance can be prevented also during high speed rotation.

By switching two types of sensors at rotation speed N1 in Fig. 12 as a boundary, excellent motor characteristics can be achieved in the range from the stalled state to high speed rotation. Fig. 13 is a flowchart for illustrating a switching process of magnetic pole rotation angle detector 60 in the first embodiment. Referring to Fig. 13, in step S1, magnetic pole rotation angle detector 60 determines whether the present rotation speed is lower than N1 or not. When the rotation speed is lower than N1 (YES in S1), magnetic pole rotation angle detector 60 detects the magnetic pole position from the output of 2-axis magnetic sensor 80. When the rotation speed is equal to or greater than N1 (NO in S1), magnetic pole rotation angle detector 60 detects the magnetic pole position from the output of alternating-type magnetic sensor 70. When the magnetic pole position is detected in step S2 or S3, the process proceeds to step S4. Motor controller 20 in Fig. 1 performs motor control using the detected magnetic pole position.

In this case, sensorless control can also be used in place of a three-phase alternating-type Hall sensor. In sensorless control, in general, the control at the start of motor rotation is complicated and the motor performance is also limited. However, these disadvantages can be overcome by combining magnetic pole detection by 2-axis magnetic sensor 80 at the start of rotation.

### [Second Embodiment]

The first embodiment has been described with regard to the case where two types of magnetic sensors are switched in accordance with the rotation speed. In the second embodiment, two types of magnetic sensors that are redundant in configuration are used for improving the reliability.

As seen in the N-T characteristics in Fig. 12, there is a region in which the motor performance decreases to some extent. However, even with only one of the sensors, there occurs no problem in operation of the motor that satisfies a certain performance. Such redundancy allows a fallback operation to be performed upon occurrence of a fault, for example, in the case of in-vehicle use. Thereby, safety can be improved.

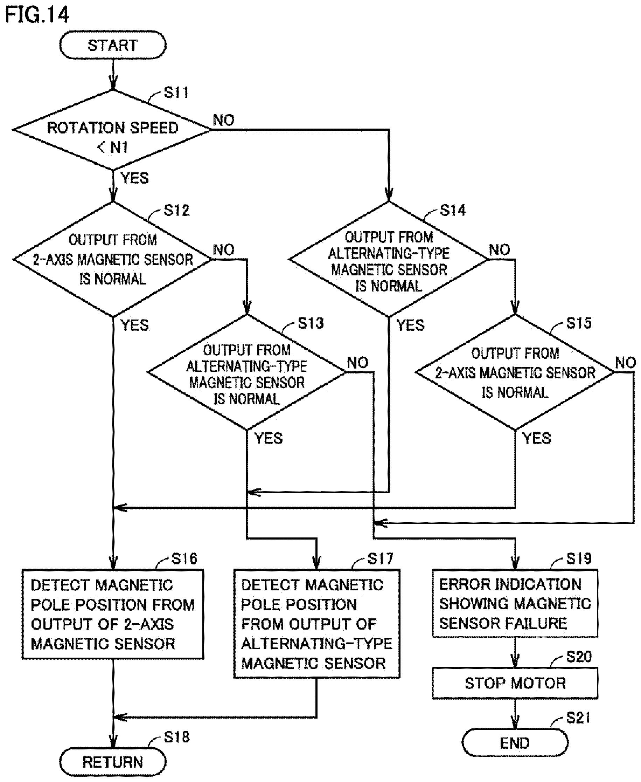

Fig. 14 is a flowchart for illustrating a switching process of a magnetic pole rotation angle detector 60 in the second embodiment. Referring to Fig. 14, in step S11, magnetic pole rotation angle detector 60 determines whether the present rotation speed is lower than N1 or not. When the rotation speed is lower than N1 (YES in S11), magnetic pole rotation angle detector 60 determines in step S12 whether the output from 2-axis magnetic sensor 80 is normal or not. For example, when the output from 2-axis magnetic sensor 80 is fixed to 0V, a disconnection may occur. Thus, magnetic pole rotation angle detector 60 determines that the output from 2-axis magnetic sensor 80 is not normal. When it is determined in step S12 that the output from 2-axis magnetic sensor 80 is not normal (NO in S12), magnetic pole rotation angle detector 60 determines in step S13 whether the output from alternating-type magnetic sensor 70 is normal or not.

On the other hand, when the rotation speed is equal to or greater than N1 in step S11 (NO in S11), magnetic pole rotation angle detector 60 determines in step S14 whether the output from alternating-type magnetic sensor 70 is normal or not. For example, in the case where at least one of the outputs from alternating-type magnetic sensor 70 is fixed to 0V, a disconnection may occur. Thus, magnetic pole rotation angle detector 60 determines that the output from alternating-type magnetic sensor 70 is not normal. When it is determined in step S14 that the output from alternating-type magnetic sensor 70 is not normal (NO in S14), magnetic pole rotation angle detector 60 determines in step S15 whether the output from 2-axis magnetic sensor 80 is normal or not.

When it is determined in step S12 or S15 that the output from 2-axis magnetic sensor 80 is normal, magnetic pole rotation angle detector 60 detects a magnetic pole position from the output of 2-axis magnetic sensor 80 (S16). On the other hand, when it is determined in step S13 or S14 that the output from alternating-type magnetic sensor 70 is normal, magnetic pole rotation angle detector 60 detects a magnetic pole position from the output of alternating-type magnetic sensor 70 (S17).

When the magnetic pole position is detected in step S16 or S17, the process proceeds to step S18. Motor controller 20 in Fig. 1 performs motor control using the detected magnetic pole position.

On the other hand, when it is determined that the output from alternating-type magnetic sensor 70 is not normal (NO in S13) or when it is determined that the output from 2-axis magnetic sensor 80 is not normal (NO in S15), magnetic pole rotation angle detector 60 outputs an error indication showing a magnetic sensor failure (S19), to thereby cause the motor controller to stop the motor (S20), so as to end the process of detecting the magnetic pole rotation angle (S21).

### [Application Example]

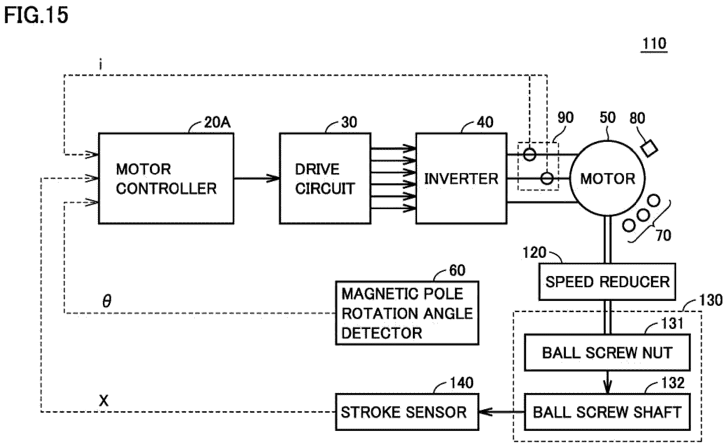

Fig. 15 is a diagram showing an application example of a motor drive system. Referring to Fig. 15, a motor drive system 110 is formed of a linear motion mechanism 130 incorporated into motor drive system 10 in Fig. 1. In addition to the configuration of motor drive system 10, motor drive system 110 further includes: a speed reducer 120 that decelerates the rotation of the rotor of motor 50; a linear motion mechanism 130; and a stroke sensor 140.

Linear motion mechanism 130 includes: a ball screw nut 131 coupled to speed reducer 120; and a ball screw shaft 132 that is rotated in a restricted manner. When ball screw nut 131 is rotated by speed reducer 120, an stroke amount X changes such that ball screw shaft 132 moves forward or backward in accordance with the rotation direction. Stroke sensor 140 detects stroke amount X of ball screw shaft 132, and outputs the detected stroke amount X to a motor controller 20A. Motor controller 20A controls the rotation of motor 50 such that stroke amount X becomes equal to the command value.

In the above-described usage, motor 50 does not always continuously rotate, but repeatedly rotates and stops at frequent intervals in many cases. In the above-described usage, the motor drive system in the present embodiment is used, so that stable thrust can be achieved also in the linear motion mechanism.

Lastly, again referring to the figures, the first and second embodiments will be hereinafter summarized. Referring to Figs. 1 to 4, motor drive system 10 includes: stator 51 around which stator coil 51B of a plurality of phases is wound; rotor 52 that rotates about the rotation axis with respect to stator 51; pulser ring 53 that is fixed to rotor 52 and provided with magnets disposed such that an N pole and an S pole alternate circumferentially; 2-axis magnetic sensor 80; alternating-type magnetic sensor 70; magnetic pole rotation angle detector 60; and motor controller 20. Also, 2-axis magnetic sensor 80 is disposed on substrate 54 having an invariable positional relation with stator 51. Alternating-type magnetic sensor 70 includes Hall sensors 71 to 73. The number of Hall sensors 71 to 73 is equal to or greater than the number of the phases of stator coil 51B. Magnetic pole rotation angle detector 60 detects a magnetic pole rotation angle of the rotor upon reception of an output from 2-axis magnetic sensor 80 and an output from alternating-type magnetic sensor 70. Motor controller 20 controls the current of the coil using the magnetic pole rotation angle of rotor 52 detected by magnetic pole rotation angle detector 60.

Preferably, as shown in Fig. 13, magnetic pole rotation angle detector 60 calculates the magnetic pole rotation angle of rotor 52 using the output from 2-axis magnetic sensor 80 when the rotation speed of rotor 52 is lower than threshold value N1, and calculates the magnetic pole rotation angle of rotor 52 using the output from alternating-type magnetic sensor 70 when the rotation speed of rotor 52 is higher than threshold value N1.

Preferably, as shown in Fig. 14, when one of 2-axis magnetic sensor 80 and alternating-type magnetic sensor 70 abnormally operates while the other of 2-axis magnetic sensor 80 and alternating-type magnetic sensor 70 normally operates, magnetic pole rotation angle detector 60 calculates the magnetic pole rotation angle of rotor 52 using the output from a normally operating one of 2-axis magnetic sensor 80 and alternating-type magnetic sensor 70.

As described above, according to the present embodiment, it becomes possible to provide a method of detecting a magnetic pole rotation position using a relatively inexpensive and small-sized sensor but without limitation of the layout of the output axis in order to allow the brushless motor to perform sine wave driving that is excellent in efficiency and torque fluctuations in the range from the stalled state to the high rotation state.

Furthermore, by using a 2-axis magnetic sensor that is inexpensive as compared with a high-speed and highly-precise expensive resolver and the like, and by providing, as a member to be detected, a pulser ring similar to a commonly used brushless motor including an alternating-type magnetic sensor (an N-S pole switch type), the magnetic pole angle can be detected with high resolution without limitation of the layout of the motor output axis.

Furthermore, in the case where the motor performance is deteriorated by the delay and the computation time of the 2-axis magnetic sensor during high speed rotation, an alternating-type magnetic sensor (an N-S pole switch type) including the same pulser ring as a member to be detected is mounted to perform position estimation by interpolation based on the elapsed time from the timing of changeover of the switch as in a conventional method. Thereby, deterioration of the motor performance is prevented. Since these sensors can be mounted on the circumference of the substrate that faces a single pulser ring as a member to be detected, motor size increase can be avoided. Furthermore, even when only one of the 2-axis magnetic sensor and the alternating-type magnetic sensor is used, the motor can be rotated while ensuring certain performance. Accordingly, the safety in the event of failure resulting from duplication of the magnetic pole detection sensors can also be expected to be improved.

It should be understood that the embodiments disclosed herein are illustrative and non-restrictive in every respect. The scope of the present invention is defined by the terms of the claims, rather than the description of the embodiments provided above, and is intended to include any modifications within the meaning and scope equivalent to the terms of the claims.

### REFERENCE SIGNS LIST

10, 110 motor drive system, 20, 20A motor controller, 30 drive circuit, 40 inverter, 50 motor, 51 stator, 51A stator core, 51B stator coil, 52 rotor, 52A rotor core, 52B permanent magnet, 53 pulser ring, 54 substrate, 60 magnetic pole rotation angle detector, 70 alternating-type magnetic sensor, 71, 73 Hall sensor, 80 2-axis magnetic sensor, 90 current sensor, 120 speed reducer, 130 linear motion mechanism, 131 ball screw nut, 132 ball screw shaft, 140 stroke sensor.

## Claims

1. A motor drive system comprising:
a stator around which a coil of a plurality of phases is wound;
a rotor that rotates about a rotation axis with respect to the stator;
a pulser ring that is fixed to the rotor and provided with magnets disposed such that an N pole and an S pole alternate circumferentially;
a 2-axis magnetic sensor that is disposed on a member having an invariable positional relation with the stator;
an alternating-type magnetic sensor that is disposed on the member, the number of alternating-type magnetic sensors being equal to or greater than the number of the phases of the coil;
a magnetic pole rotation angle detector that detects a magnetic pole rotation angle of the rotor upon reception of an output from the 2-axis magnetic sensor and an output from the alternating-type magnetic sensor; and
a motor controller that controls a current through the coil using the magnetic pole rotation angle of the rotor detected by the magnetic pole rotation angle detector.

2. The motor drive system according to claim 1, wherein
the magnetic pole rotation angle detector
calculates the magnetic pole rotation angle of the rotor using the output from the 2-axis magnetic sensor when a rotation speed of the rotor is lower than a threshold value, and
calculates the magnetic pole rotation angle of the rotor using the output from the alternating-type magnetic sensor when the rotation speed of the rotor is higher than the threshold value.

3. The motor drive system according to claim 1 or 2, wherein
when one of the 2-axis magnetic sensor and the alternating-type magnetic sensor abnormally operates while the other of the 2-axis magnetic sensor and the alternating-type magnetic sensor normally operates, the magnetic pole rotation angle detector calculates the magnetic pole rotation angle of the rotor using the output from a normally operating one of the 2-axis magnetic sensor and the alternating-type magnetic sensor.

4. A method of controlling a motor,
the motor including
a stator around which a coil of a plurality of phases is wound;
a rotor that rotates about a rotation axis with respect to the stator,
a pulser ring that is fixed to the rotor and provided with magnets disposed such that an N pole and an S pole alternate circumferentially,
a 2-axis magnetic sensor that is disposed on a member having an invariable positional relation with the stator, and
an alternating-type magnetic sensor that is disposed on the member, the number of alternating-type magnetic sensors being equal to or greater than the number of the phases of the coil, the method comprising:
calculating a magnetic pole rotation angle of the rotor using an output from the 2-axis magnetic sensor when a rotation speed of the rotor is lower than a threshold value, and calculating the magnetic pole rotation angle of the rotor using an output from the alternating-type magnetic sensor when the rotation speed of the rotor is higher than the threshold value; and
controlling a current through the coil using the calculated magnetic pole rotation angle of the rotor.
